# FASCICULE DE BREVET EUROPEEN

(11) **EP 0 948 458 B1**
(45) Date de publication et mention de la délivrance du brevet: **13.06.2001**
(21) Numéro de dépôt: 97952100.2
(22) Date de dépôt: 18.12.1997
(51) Int. Cl.: C01B 23/00, F25J 3/08, B01D 53/04, C01B 3/50

(54) **PROCEDE D'EPURATION D'UN FLUIDE CRYOGENIQUE PAR FILTRATION ET ADSORPTION**
VERFAHREN ZUR REINIGUNG EINES KRYOGENISCHEN FLUID MITTELS FILTRATION UND ADSORPTION
METHOD FOR PURIFYING A CRYOGENIC FLUID BY FILTRATION AND ADSORPTION

(30) Priorité: 24.12.1996 FR 9615972
(43) Date de publication de la demande: 13.10.1999
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: GARY, Daniel, F-78180 Montigny le Bretonneux (FR); LARDEAU, René, F-91160 Saulx Les Chartreux (FR); FRAYSSE, Philippe, 71180 Montigny le Bretonneux (FR); CASTELLANET, Frédéric, F-78230 Le Pecq (FR)
(74) Mandataire: Le Moenner, Gabriel
(86) Numéro de dépôt international: FR9702345
(87) Numéro de publication internationale: WO9828226

(56) Documents cités:
- EP-A- 0 601 601
- EP-A- 0 613 857
- EP-A- 0 662 595
- US-A- 3 415 069
- US-A- 3 616 602
- ABRIKOSOVA I I ET AL: "THE PURITY OF LIQUID HELIUM" CRYOGENICS, vol. 11, no. 2, avril 1971, pages 137-138, XP000615921

## Description

La présente invention se rapporte au domaine de l'épuration des fluides cryogéniques et, plus particulièrement, à un procédé et à un dispositif d'épuration d'hélium à l'état liquide, gazeux, supercritique ou diphasique en l'une au moins des impuretés à l'état solide et/ou liquide et/ou gazeux qu'il contient.

Actuellement, les fluides cryogéniques trouvent une utilisation dans de nombreux et divers domaines de l'industrie. Ainsi, l'azote, l'hélium, le néon, l'argon, le deutérium, le krypton et le xénon sont couramment mis en oeuvre dans le domaine de l'électronique.

Ce domaine tout particulièrement requiert ces composés aussi purs que possible, c'est-à-dire débarrassés de leurs impuretés majeures, afin d'éviter une dégradation subséquente des composants électroniques par réaction avec lesdites impuretés. A titre d'exemple, on peut citer l'utilisation de l'hélium ultra pur, en tant que gaz inerte utilisable dans le maintien à température constante des pastilles supports de circuits intégrés formant des mémoires ou des processeurs, ou dans le refroidissement des "wafers".

On assiste également à une demande croissante dans le domaine électronique en ce qui concerne la fourniture d'hydrogène ultra pur.

De nombreux procédés d'épuration de fluides cryogéniques, tels les fluides inertes, sont connus de l'art antérieur, mais ceux-ci présentent généralement plusieurs inconvénients ou désavantages, à savoir:
- ils ne sont pas adaptés à une épuration des fluides cryogéniques quel que soit leur état, à savoir liquide, gazeux, supercritique et/ou diphasique, et nécessitent donc des étapes de chauffage et/ou refroidissement, selon le cas, pour porter le fluide cryogénique à épurer à une température donnée, à laquelle devra être effectuée l'élimination des impuretés;
- ils nécessitent l'utilisation d'adsorbants coûteux par exemple de type getter;
- les adsorbants utilisés ne sont efficaces qu'à "chaud", c'est-à-dire à des températures supérieures à 0°C, voire à 100°C;
- ils sont limités du point de vue de la quantité de fluide cryogénique pouvant être traité pendant une période de temps donné;
- ils sont limités à un type de fluide cryogénique, par exemple à l'argon ou à l'hélium, c'est-à-dire qu'un même procédé et/ou même dispositif ne peuvent pas être utilisés pour épurer des fluides cryogéniques de natures différentes;
- ils présentent des limites quant aux impuretés pouvant être éliminées de par l'utilisation d'adsorbants ou de catalyseurs ne réagissant que de manière sélective, c'est-à-dire avec certaines impuretés et pas d'autres, d'où il résulte un fluide cryogénique qui n'est que partiellement épuré; par exemple, les adsorbants ou les catalyseurs classiques ne permettent pas d'éliminer les impuretés azote contenues dans l'hélium.
- ils comprennent généralement une ou plusieurs étapes de catalyse oxydative afin de transformer notamment les impuretés hydrogène et/ou monoxyde de carbone en eau et/ou dioxyde de carbone.

Ainsi, le document US-A-3,996,082 décrit un procédé de purification de l'argon gazeux en son impureté oxygène au moyen d'une zéolite synthétique du type A.

Le document US-A-2,874,030 décrit, quant à lui, un procédé d'épuration de l'argon gazeux en son impureté oxygène, dans lequel l'oxygène est transformé en eau par réaction catalytique avec un excès d'hydrogène; l'eau formé étant ensuite éliminée par déshydratation.

Le document EP-A-0350656 décrit, par ailleurs, un procédé de purification d'un gaz inerte en ses impuretés oxygène, monoxyde de carbone et hydrogène, dans lequel le monoxyde de carbone et l'hydrogène sont éliminés par oxydation catalytique à une température comprise entre 150°C et 250°C en présence d'un premier catalyseur à base de cuivre réduit puis d'un deuxième catalyseur à base de cuivre oxydé, en donnant du dioxyde de carbone et de l'eau, lesquels sont ensuite éliminés par adsorption à température ambiante sur un adsorbant du type tamis moléculaire.

En outre, le document FR 9604955 décrit un procédé pour fournir à une conduite d'utilisation de l'hélium ultra pur, dans lequel on soutire de l'hélium sous forme liquide ou supercritique d'un réservoir de stockage, on filtre l'hélium au moyen d'un tissu d'acier afin de retenir les impuretés solides, on vaporise l'hélium filtré et on renvoie l'hélium gazeux résultant à la conduite d'utilisation. Il est précisé dans ce document que les impuretés hydrogène et/ou néon dissoutes dans l'hélium liquide ou supercritique ne sont pas retenues.

Le document FR 9507943 décrit, quant à lui, un procédé d'épuration des gaz inertes, tels l'azote et les gaz rares, en leurs impuretés oxygène et monoxyde de carbone par adsorption à une température inférieure à 30°C sur un adsorbant spécifique de type oxyde métallique poreux; l'impureté hydrogène est subsidiairement éliminée par distillation.

Par ailleurs, le document FR 9611271 a trait à l'épuration d'un fluide cryogénique, tels l'azote liquide, l'argon liquide ou l'hélium liquide en ses impuretés hydrogène, monoxyde de carbone et/ou oxygène par adsorption sur un support de type alumine, silice, zéolite ou oxyde de titane supportant un métal, tels le platine, le palladium, le rhodium ou l'iridium.

En outre, le document US-A-4,659,351 décrit un procédé en deux étapes d'obtention d'hélium liquide, dans lequel un flux gazeux constitué essentiellement d'hélium et d'azote avec quelques impuretés mineures et soumis à une étape de refroidissement afin de condenser lesdites impuretés mineures et l'azote, lesquels sont ensuite éliminés; le flux gazeux enrichi en hélium est ensuite soumis à un procédé de type PSA (Pressure Swing Adsorption) ou procédé d'adsorption par variation de pression, d'où il résulte un flux d'hélium gazeux relativement pur lequel hélium est ensuite condensé en hélium liquide. On comprendra aisément que ce procédé présente de nombreux désavantages et inconvénients, tant au niveau des coûts énergétiques que de la pureté de l'hélium obtenu. En effet, la nécessité de mettre en oeuvre des étapes de vaporisation/liquéfaction de l'hélium est très pénalisant du point de vue énergétique et financier, et bien que l'hélium obtenu soit relativement pur, il contient des quantités d'impuretés bien trop élevées pour pouvoir être utilisé à des fins électroniques notamment.

Par ailleurs, le document US-A-3,415,069 porte sur un procédé de purification d'hélium gazeux dans lequel les impuretés vapeur d'eau, dioxyde de carbone et hydrocarbures sont transformés en cristaux par refroidissement à une température d'environ -185°C puis éliminées par un "piège à froid". L'hélium gazeux est ensuite filtré par passage au travers d'un lit de charbon activé d'écorce de noix de coco. Toutefois, ce procédé ne permet pas d'éliminer les impuretés hydrogène, néon et azote pouvant se trouver dans l'hélium, la pureté de l'hélium obtenu n'est pas indiquée, et rien n'indique que ce procédé puisse être utilisé pour éliminer d'autres impuretés, telles le monoxyde de carbone, l'oxygène, l'argon et le krypton.

En outre, le document Abrikosova et al., The purity of liquid helium, Cryogenics, vol.11, n°2, avril 1971, p.137-138, concerne un procédé de filtration d'hélium liquide, dans lequel les particules d'aérosols chargées sont éliminées au moyen de filtres Petryanov. Cependant, ni le degré de pureté, ni le type de particules chargées pouvant être éliminées n'est indiqué. De plus, il seules les particules chargées et en suspension dans l'hélium peuvent être éliminées et encore pas en totalité.

Le but de la présente invention est donc de fournir un procédé et un dispositif de purification d'hélium quel que soit son état, à savoir liquide, diphasique, gazeux ou supercritique, qui soit moins pénalisant du point de vue économique et énergétique que les procédés et dispositifs actuellement existant, qui permette d'obtenir de l'hélium pur, c'est-à-dire exempt au moins de ses principales impuretés solides et/ou liquides et/ou gazeuses.

L'invention concerne alors un procédé de purification d'hélium à l'état liquide, diphasique, gazeux ou supercritique, ayant un point d'ébullition Pe, en l'une au moins de ses impuretés ayant un point d'ébullition Pe', avec Pe' > Pe, lesdites impuretés étant choisies dans le groupe formé par l'hydrogène, le néon, l'azote, le monoxyde de carbone, le dioxyde de carbone, l'oxygène, l'argon, le krypton, le xénon, les hydrocarbures et l'eau, comprenant au moins:
- une étape de filtration d'au moins une impureté à l'état solide au moyen d'un filtre mécanique;
- et une étape d'adsorption d'au moins une impureté à l'état liquide ou gazeux;
et dans lequel on récupère au moins une partie de l'hélium au moins partiellement épuré, ledit hélium contenant au plus environ 1 ppb d'impuretés, du groupe formé par l'hydrogène, le néon, l'azote, le monoxyde de carbone, le dioxyde de carbone, l'oxygène, l'argon, le krypton, le xénon, les hydrocarbures et l'eau.

En d'autres termes, les impuretés à l'état solide (cristaux) contenues dans le fluide cryogénique à épurer sont retenues par filtration mécanique, alors que les impuretés à l'état liquide ou à l'état gazeux sont adsorbées au moyen d'au moins un matériau adsorbant.

Selon le cas, le procédé de l'invention pourra comprendre, par ailleurs, l'une ou plusieurs des caractéristiques suivantes:
- la filtration est réalisée au moyen d'au moins un filtre dont le diamètre de pore est < 60 µm, de préférence ≤ 20 µm, préférentiellement ≤ 5 µm.
- la filtration mécanique est réalisée au moyen d'un filtre en métal ou céramique, ou au moyen du matériau adsorbant utilisé pour éliminer les impuretés à l'état liquide ou à l'état gazeux. En effet, ledit -matériau adsorbant peut également faire office de filtre afin de retenir les particules et les impuretés solides (cristaux) contenues dans le fluide cryogénique à épurer; dans ce cas, les étapes de filtration et d'adsorption seront dites "simultanées".
- l'adsorption des impuretés est réalisée au moyen d'un adsorbant choisi dans le groupe formé par le charbon actif, les zéolites échangées ou non-échangées par des cations métalliques, le gel de silice, l'alumine ou tout autre adsorbant poreux permettant d'arrêter efficacement un ou plusieurs type d'impuretés solubles ou gazeuses dans le fluide cryogénique à épurer, par exemple, un tissu carboné.
- au moins une étape de filtration mécanique est effectuée en amont et/ou en aval d'au moins une étape d'adsorption, et, de préférence, en amont et en aval de l'étape d'adsorption. Il est également possible d'alterner plusieurs étapes d'adsorption et plusieurs étapes de filtration en utilisant des matériaux adsorbants et des moyens de filtration identiques, analogues ou différents dans les différentes étapes.
- l'adsorbant mis en oeuvre dans l'étape d'adsorption des impuretés contenues dans le fluide cryogénique et/ou le ou les filtres subit au moins une étape de régénération. La régénération du matériau adsorbant peut être réalisée, par exemple, en suivant le mode opératoire suivant:
   - étuve de quelques heures à une température de 100°C à 150°C du matériau adsorbant, tel le charbon actif (uniquement lors de la première mise en oeuvre du matériau adsorbant);
   - balayage ou purge de l'épurateur à l'aide d'un gaz inerte, tel l'azote, à température ambiante et à pression atmosphérique;
   - et balayage subséquent à l'aide du gaz à épurer à température ambiante et à pression atmosphérique.

Après ce double balayage, le système de purification est apte à effectuer une nouvelle phase de purification.

L'invention concerne aussi un dispositif pour la mise en oeuvre du procédé selon l'invention, caractérisé en ce qu'il comporte une zone de purification d'hélium, laquelle zone de purification comprend au moins un filtre mécanique et au moins un lit d'adsorbant, des moyens d'alimentation en hélium de ladite zone de purification et des moyens de récupération de l'hélium purifié contenant au plus 1 ppb d'impuretés.

Selon le cas, le dispositif de l'invention peut comporter en outre:
- des moyens de stockage de l'hélium purifié;
- des moyens d'acheminement en ligne de l'hélium purifié vers un site d'utilisation;
- des moyens de régénération du matériau adsorbant, permettant une régénération dudit matériau adsorbant, par exemple en suivant le mode opératoire susmentionné.

Le procédé de l'invention peut donc avantageusement être mis en oeuvre pour épurer, c'est-à-dire purifier, de l'hélium, qu'il soit à l'état:
- liquide ou sous refroidi, c'est-à-dire à une température inférieure à son point d'ébullition,
- gazeux, c'est-à-dire à une température supérieure de quelques degrés par rapport à sa température de liquéfaction ou point d'ébullition, par exemple étant à une température d'environ 5°C à 20°C supérieure audit point d'ébullition,
- diphasique, c'est-à-dire sous forme de mélange liquide/gaz, donc à une température sensiblement égale au point de bulle ou température d'ébullition, ou fluctuant autour dudit point de bulle,
- ou supercritique, par exemple dans le cas de l'hélium, à une température d'environ -268°C pour une pression de 2,275.10⁵ Pa.

L'avantage de l'invention réside dans le fait qu'elle permet une ultra purification d'hélium en au moins une de ses impuretés ayant un point d'ébullition supérieur à celui de l'hélium, qu'elles soient à l'état solide et/ou liquide et/ou gazeux, au moyen d'étapes de filtration mécanique et/ou d'adsorption desdites impuretés.

Le procédé de l'invention sera avantageusement mis en oeuvre dans une gamme de température comprise entre -273°C et -240°C environ, et pour une gamme de pression comprise entre 10⁵ Pa et 30.10⁵ Pa, de préférence entre 10⁵ Pa et 10.10⁵ Pa.

A titre indicatif, les points ou températures d'ébullition, à pression atmosphérique, de différents composés sont donnés dans le tableau I ci-après:

**TABLEAU I**

| **Composés** | **Pe (°C)** |
|---|---|
| Argon | -185,80 |
| Azote | -195,60 |
| Xénon | -108,10 |
| Krypton | -153,35 |
| Néon | -246,05 |
| Oxygène | -182,97 |
| Hélium | -268,90 |
| Hydrogène | -252,77 |
| Méthane | -161,52 |
| Propane | - 42,04 |
| Ethane | - 88,68 |
| CO₂ | - 78,50 |
| NO | -151,75 |
| CF₄ | -127,94 |
| D2 | -249,58 |

La présente invention est particulièrement bien adaptée à l'épuration de l'hélium, de préférence à l'état liquide.

La présente invention va maintenant être exposée plus en détail à l'aide d'exemples donnés à titre illustratif, mais nullement limitatif de l'invention, en référence aux figures annexées.

La figure 1 représente un dispositif expérimental classique pouvant être utilisé pour réaliser les essais ci-après détaillés.

La figure 2 représente un dispositif industriel de mise- en oeuvre du procédé selon l'invention.

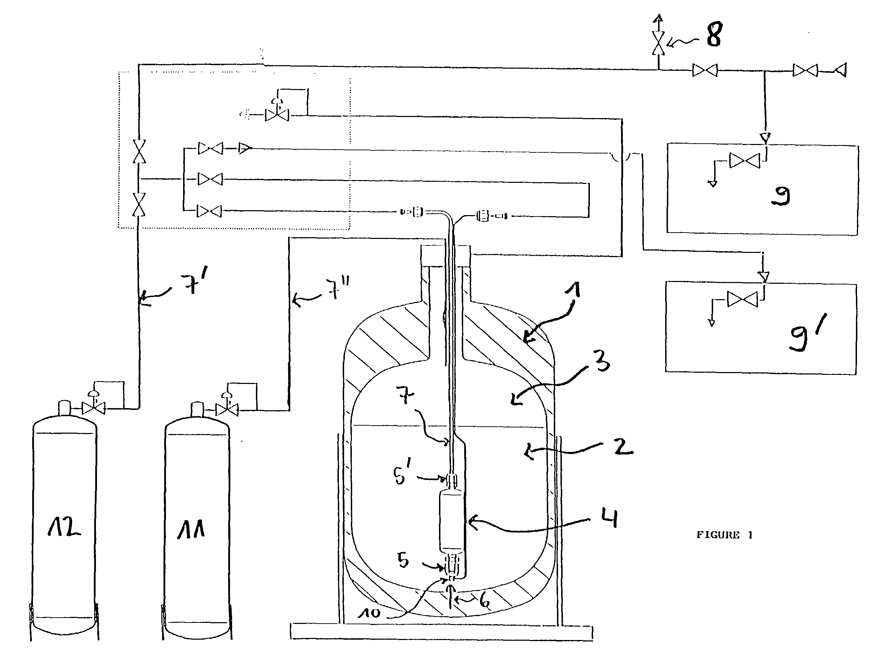

Sur la figure 1, est représenté un réservoir 1 isolé au vide afin d'éviter ou de minimiser toute entrée de chaleur, contenant de l'hélium liquide 2 et un ciel d'hélium gazeux 3. Dans ce dispositif expérimental, la zone de purification de l'hélium pollué par des impuretés est constituée d'une cartouche 4 contenant un matériau adsorbant, ici du charbon- actif, destiné à adsorber les impuretés de type liquide ou gaz et de deux filtres mécaniques 5 et 5', aménagés respectivement en amont et en aval de ladite cartouche d'épuration 4, lesquels filtres 5 et 5' sont destinés à arrêter les impuretés de type solide (cristaux).

Un filtre mécanique est habituellement réalisé par compression d'une poudre métallique, telle une poudre d'un métal ou d'un alliage de métaux, de préférence inoxydable, et mise en forme d'un disque de la structure compactée obtenue. Il est possible de faire varier la géométrie du disque ou filtre obtenu en jouant notamment sur son diamètre, son épaisseur et sa porosité. A titre d'exemple, on peut citer les filtres ou frittés métalliques commercialisés par la société PORAL© ou par la société METAFRAN©. Certains joints d'étanchéité peuvent également être équipés d'un tel filtre mécanique métallique, par exemple, le joint VCR© (raccords à étanchéité de surface par joint métallique) fabriqués par la société CAJON™.

L'hélium liquide 2 pollué entre dans la zone de purification dans le sens indiqué par la flèche 6, c'est-à-dire de bas en haut. Les impuretés solides sont tout d'abord arrêtées par le filtre 5, ensuite les impuretés liquides sont adsorbées dans la cartouche d'épuration 4 par le matériau adsorbant, par exemple du charbon actif, et pour finir les particules solides qui peuvent être générées par attrition du matériau adsorbant sont arrêtées par le filtre 5'.

L'hélium liquide ultra pur ainsi obtenu est acheminé, via la conduite 7, vers les analyseurs 9 et 9' ou, le cas échéant, vers une mise à l'air 8.

Selon cet agencement, l'épuration est effectuée sur de l'hélium à l'état liquide. Toutefois, pour tester l'efficacité du procédé de l'invention sur de l'hélium gazeux, on procède de la même manière, mais en plaçant, cette fois, la zone de purification dans le ciel gazeux 3 de manière à ce que l'orifice 10 d'entrée de l'hélium dans le filtre 5 se situe au-dessus du niveau de l'hélium liquide, donc dans le ciel gazeux, où est ainsi prélevé l'hélium gazeux à épurer.

Dans tous les cas, l'acheminement de l'hélium gazeux ou liquide à travers successivement le filtre 5, la cartouche d'épuration 4, le filtre 5' et la canalisation 7 est effectué, de manière classique, en augmentant la pression qui s'exerce dans le récipient 1.

Ce système expérimental est relié via les canalisations 7 et 7' à un réservoir 12 contenant de l'hélium ultra pur permettant de purger, c'est-à-dire d'assainir, la zone de purification comprenant les filtres 5 et 5' et la cartouche d'épuration 4, en particulier préalablement ou à la suite d'une étape de purification.

Par ailleurs, un autre réservoir 11 contient, quant à lui, de l'hélium pollué par des quantités connues d'impuretés destinées à polluer de manière artificielle l'hélium liquide ou gazeux contenu dans le récipient 1 avec des quantités connues de polluants et, par là même, de tester l'efficacité du procédé d'épuration de l'invention.

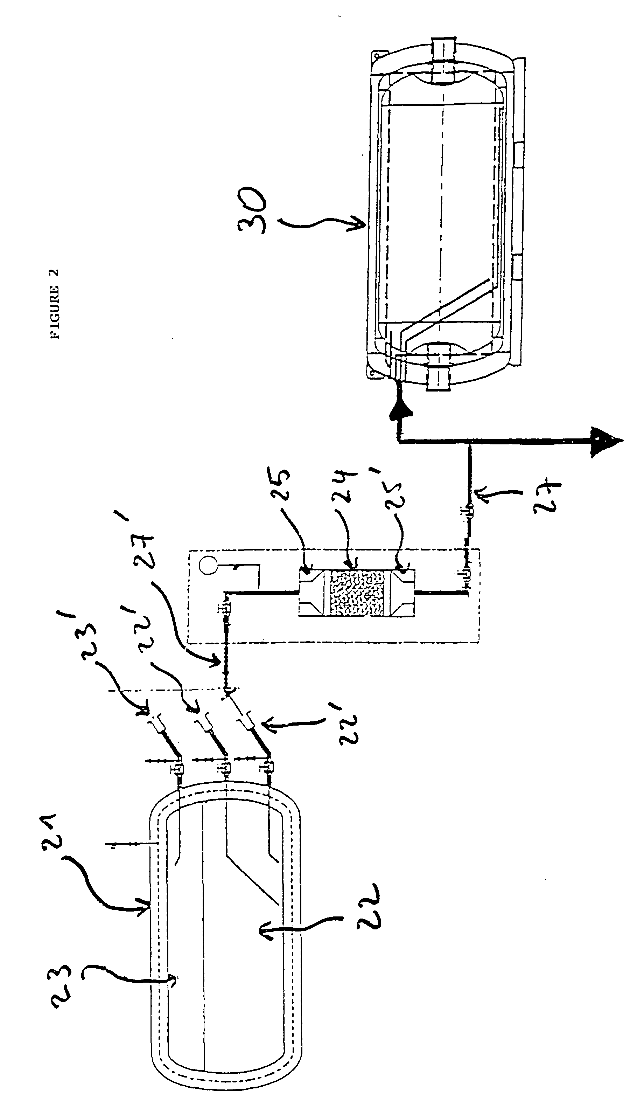

Sur la figure 2 est représenté un dispositif industriel d'épuration d'hélium liquide. De l'hélium liquide 22 surmonté d'un ciel d'hélium gazeux 23 est contenu dans un réservoir isolé 21, par exemple un réservoir de stockage ou la citerne d'un camion.

De l'hélium gazeux 23 ou liquide 22 est soutiré du réservoir isolé 21 par l'intermédiaire de moyens de soutirage 23' ou 22', respectivement, et acheminé, via une conduite 27', jusqu'à une zone de purification comportant un premier filtre 25, situé en amont d'une cartouche d'épuration 24 contenant un matériau adsorbant, tel du charbon actif ou tout autre matériau adsorbant poreux adéquat permettant d'adsorber une ou plusieurs impuretés à l'état liquide ou à l'état gazeux, laquelle cartouche d'épuration 24 se trouve en amont d'un deuxième filtre 25'.

L'hélium pollué issu du réservoir 21 est donc purifié dans la zone d'épuration et l'hélium ultra pur obtenu est acheminé, via la conduite 27, jusqu'à un réservoir isolé 30 d'hélium ultra pur ou le cas échéant, vers un site d'utilisation (non représenté).

On comprend aisément que la manipulation des fluides cryogéniques est une opération délicate et que, pour assurer une épuration optimale, il faut veiller à ce que l'ensemble du dispositif mettant en oeuvre la présente invention soit correctement isolé, de manière à éviter, ou mieux à éliminer, toute entrée de chaleur néfaste; une isolation sous vide est préférée.

Par ailleurs, comme nous le verrons dans les exemples illustratifs ci-après, on pourra également, selon le cas, se passer de l'un ou l'autre, voire des deux filtres 25 et 25' et obtenir, néanmoins, un fluide cryogénique ultra pur répondant aux spécifications attendues, notamment aux spécifications du domaine électronique. Dans ce cas, c'est le matériau adsorbant poreux qui assure à la fois la filtration mécanique des particules solides et l'adsorption des impuretés à l'état liquide ou gazeux.

Afin de permettre la régénération du matériau adsorbant se trouvant dans la cartouche d'épuration et des filtres permettant de retenir les impuretés solides, il est nécessaire ou souhaitable de soumettre la zone de purification à un procédé de régénération, par exemple un procédé classique mettant en oeuvre un retour de la zone de purification à la température ambiante au moyen d'un balayage de ladite zone de purification à l'aide d'un gaz inerte, tel l'azote, de sorte de sublimer et/ou désorber les polluants adsorbés et/ou retenus, suivi d'un "assainissement", c'est-à-dire d'un balayage, à l'aide d'abord d'hélium gazeux ultra pur, puis d'hélium liquide ultra pur, préalablement à toute nouvelle phase d'épuration.

### Exemples:

Dans les exemples réalisés ci-après les quantités d'impuretés présentent dans le fluide cryogénique à purifier sont suivies à l'aide d'analyseurs couramment commercialisés. Ainsi, les quantités d'impuretés monoxyde de carbone et hydrogène sont mesurées au moyen d'un chromatographe RGA3 commercialisé par la société TRACE ANALYTICAL, dont le seuil de détection est de l'ordre de 1 ppb pour le monoxyde de carbone et de 5 ppb pour l'hydrogène (ppb = partie par milliard en volume), et la quantité d'impureté oxygène est mesurée au moyen d'un analyseur de type OSK commercialisé par la société OSAKA SANSO KOGYO, lequel à un seuil de détection de 1 ppb pour l'oxygène.

Pour un suivi analytique plus exhaustif, les autres impuretés (azote, néon, dioxyde de carbone...) peuvent aisément être détectées au moyen d'analyseurs adéquats, tel un analyseur de type APIMS (Atmospheric Pressure Ion Mass Spectrometry) dont le seuil de détection pour ces impuretés est inférieur à 1 ppb.

Un dispositif classique pouvant servir à réaliser les différents essais est représenté sur la figure 1.

### Exemple 1

Dans cet exemple, l'épuration de l'hélium liquide en ses impuretés O₂, CO et H₂ a été réalisée uniquement par filtration mécanique au moyen d'un fritté, composé d'un joint VCR équipé d'un filtre métallique poreux (épaisseur 2,5 mm, porosité 2 µm) commercialisé par la société SWAGELOCK.

A la température de l'hélium liquide, les impuretés autres que l'hydrogène sont sous forme solide, alors qu'une fraction de l'hydrogène est encore sous forme liquide.

Avant épuration, l'hélium liquide contient environ 1 ppm (partie par million en volume) de monoxyde de carbone, environ 5 ppm d'oxygène et environ 2 ppm d'hydrogène, et d'autres impuretés solides sous forme de traces, à savoir du dioxyde de carbone, de l'eau, de l'azote et du néon.

Après épuration, l'hélium épuré contient moins de 1 ppb de monoxyde de carbone et moins de 1 ppb d'oxygène; par contre, un résiduaire de 100 ppb à quelques centaines de ppb d'hydrogène est détecté en aval du filtre (en fonction des conditions opératoires de pression et de température).

L'épuration de l'hélium liquide sur filtre mécanique trouve donc ses limites en ce qui concerne l'impureté hydrogène. Néanmoins, une telle filtration est suffisante lorsque l'hélium à épurer ne contient pas d'impuretés de type hydrogène, étant donné que toutes les autres impuretés sont arrêtées.

### Exemple 2

Cet exemple est en tout point analogue à l'exemple précédent à l'exception du fait que la filtration mécanique (filtre ou fritté métallique) est associée à une adsorption, notamment de l'hydrogène sur un adsorbant adéquat, ici du charbon actif.

Dans ce cas, la mise en oeuvre d'une filtration mécanique couplée à une adsorption permet d'obtenir de l'hélium liquide ultra pur, ne contenant plus cette fois, contrairement à l'exemple précédent, d'impuretés de type hydrogène. En effet, cette impureté hydrogène est adsorbée par le charbon actif.

L'hélium ultra pur ainsi obtenu répond tout à fait aux spécifications et aux exigences d'une application à des fins électroniques, c'est-à-dire que l'hélium liquide épuré contient moins de 1 ppb en ses diverses impuretés.

Il est à noter que l'adsorption des impuretés solubles dans l'hélium liquide, par exemple d'hydrogène, peut être effectuée en amont et/ou en aval de la filtration mécanique. Préférentiellement, des filtres mécaniques sont placés de part et d'autre du matériau adsorbant.

### Exemple 3

Cet exemple est analogue aux exemples précédents à l'exception du fait que l'élimination des impuretés contenues dans l'hélium liquide n'est effectuée qu'au moyen d'un lit de particules d'un matériau adsorbant, là encore un lit de charbon actif; en d'autres termes, on a supprimé le(s) filtre(s) mécanique(s) métallique(s).

De façon surprenante, on obtient, comme dans l'exemple 2, de l'hélium liquide ultra pur et ce, malgré la suppression de(s) filtre(s) mécanique(s) métallique(s). Le charbon actif microporeux permet donc non seulement d'adsorber les impuretés liquides ou gazeuses, mais aussi de filtrer, c'est-à-dire de retenir mécaniquement, les impuretés solides ou cristallisées (adsorption et filtration dites "simultanées").

### Exemple 4

Cet exemple est analogue à l'exemple 2, à l'exception du fait que l'hélium à épurer contient non seulement les impuretés monoxyde de carbone, hydrogène et oxygène, mais aussi d'autres impuretés, à savoir: de l'eau, du dioxyde de carbone (1 ppm), de l'azote (1 ppm) et du néon (1 ppm).

L'hélium liquide après épuration contient, là encore, moins de 1 ppb en ses différents polluants et les impuretés H₂O, CO₂, N₂ et Ne sont éliminées en totalité.

### Exemple 5

Cet exemple est analogue à l'exemple 2, à l'exception du fait que l'adsorbant (charbon actif) est remplacé par un tissu carboné, par exemple de type Actitex CS 1501 commercialisé par la société ACTITEX©.

Les résultats obtenus sont identiques à ceux de l'exemple 2.

Là encore, on obtient une ultra purification de l'hélium liquide lorsqu'on combine filtration mécanique et adsorption par le tissu carboné.

### Exemple 6

Dans cet exemple de type laboratoire, on étudie l'influence de la taille des pores (diamètre des pores) du filtre utilisé sur l'efficacité de l'épuration d'hélium liquide artificiellement pollué par des impuretés de types hydrogène (H₂), oxygène (O₂) et monoxyde de carbone (CO) en quantités connues. Avant purification, l'hélium pollué contient de l'ordre d'environ 1 ppm d'impuretés CO, environ 5 ppm d'impuretés O₂ et environ 2 ppm d'impuretés H₂.

Selon le cas, l'hélium pollué est purifié par filtration uniquement (essais 1 à 4), ou par filtration et adsorption (essais 5 à 10), à une pression de 1.7 bars absolus et à un débit de 1 Nm³/h.

Les filtres utilisés sont de type métallique ou céramique et ont un diamètre allant de 2 à 60 µm. Par ailleurs, l'adsorbant mis en oeuvre est soit un tissu carboné (TC), soit du charbon actif (CA).

Les résultats obtenus sont consignés dans le tableau ci-après.

**Tableau**

| Essai n° | Filtre | Adsorbant | Teneur en impuretés résiduelles (en ppb) | | |
|---|---|---|---|---|---|
| | Taille de pores (*µ*m) | Type | H₂ | O₂ | CO |
| 1 | 2 | / | 100 à 200 | ND | ND |
| 2 | 5 | / | 100 à 200 | ND | ND |
| 3 | 20 | / | 100 à 200 | env. 50 | env. 50 |
| 4 | 60 | / | 100 à 200 | env. 100 | env. 100 |
| 5 | 2 | CA | ND | ND | ND |
| 6 | 2 | TC | ND | ND | ND |
| 7 | 5 | CA | ND | ND | ND |
| 8 | 5 | TC | ND | ND | ND |
| 9 | 20 | CA | ND | ND | ND |
| 10 | 60 | CA | ND | ND | ND |
| ND : non détecté par l'analyseur, e.g. quantité inférieure au seuil de détection de l'analyseur utilisé (environ < 1 ppb pour CO et O₂ et environ 5 ppb pour H₂) | | | | | |

Il ressort clairement du tableau précédent que la combinaison d'au moins une étape de filtration et d'au moins une étape d'adsorption des impuretés permet d'obtenir de l'hélium de très haute pureté, e.g. contenant moins de 1 ppb d'impuretés.

Toutefois, comme le montrent les essais 1 à 4, il est préférable d'utiliser un filtre mécanique ayant une porosité inférieure à 60 µm, de préférence inférieure à 20 µm et, si possible, de 2 à 5 µm environ, voire inférieure à 2 µm. En effet, plus la porosité du filtre est faible plus l'efficacité d'élimination des impuretés solides ou cristallisées est élevée.

Cependant, on constate, en outre, qu'une étape de filtration seule ne permet pas d'éliminer certaines des impuretés, en particulier les impuretés dissoutes, tel H₂.

A l'inverse, la combinaison d'étapes de filtration et d'adsorption permet d'obtenir de l'hélium contenant moins de 1 ppb d'impuretés, lesdites impuretés solubles étant alors efficacement éliminées au moyen d'un adsorbant adéquat, tel le charbon actif ou un tissu carboné. D'autres adsorbants peuvent être utilisés, notamment les zéolites échangées ou non-échangées, l'alumine activée ou le gel de silice.

### Exemple 7

Cet exemple pré-industriel vise à vérifier l'efficacité dans le temps d'un procédé d'épuration d'hélium liquide mettant en oeuvre une étape de filtration sur un filtre mécanique métallique ayant un diamètre de pore d'environ 3 µm et une étape d'adsorption sur un adsorbant, tel du charbon actif, ledit procédé étant mis en oeuvre à une pression de 1.7 bars absolus et à un débit de 2500 Nm³/h.

Les teneurs moyennes en impuretés H₂, CO et H₂ de l'hélium à purifier sont les mêmes que celles de l'exemple 9 et celles en impuretés méthane (CH₄) et dioxyde de carbone (CO₂) sont, respectivement, de 0.1 ppm et 0.5 ppm.

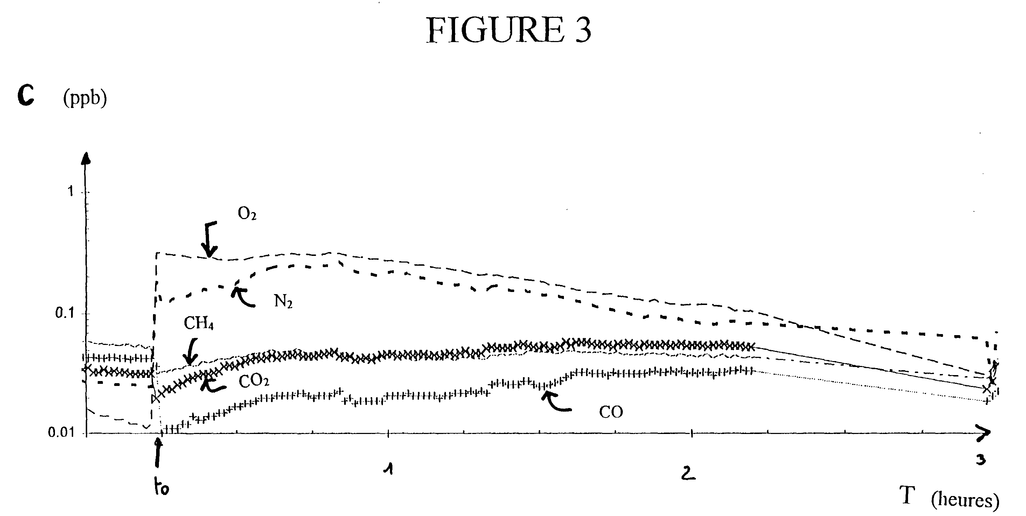

Les résultats obtenus sont représentés sur la figure 3 annexée où la concentration (C) en impuretés O₂, N₂, CH₄, CO₂ et CO (en ppb) est représentée en ordonnées et la durée T d'épuration en abscisses (en heures). Plus précisément, on constate, qu'après 3 heures, la teneur en impuretés en maintenue à une valeur bien inférieure à 1 ppb; le point de départ de la mesure en impuretés étant fixée au temps tₒ.

Il en résulte que le procédé de l'invention est apte à être mis en oeuvre à l'échelle industrielle de par son efficacité tant au niveau de la qualité et de la pureté de l'hélium liquide obtenu (moins de 1 ppb d'impuretés) qu'au niveau de la durée de fonctionnement du procédé, à savoir plusieurs heures sans régénération.

A l'échelle industrielle, on veillera toutefois à effectuer une régénération du filtre et/ou de l'adsorbant avant percée des impuretés, ce qui dépendant bien entendu des débits traités et de la qualité d'impuretés à éliminer.

## Revendications

1. Procédé de purification d'hélium à l'état liquide, diphasique, gazeux ou supercritique, ayant un point d'ébullition Pe, en l'une au moins de ses impuretés ayant un point d'ébullition Pe', avec Pe' > Pe, lesdites impuretés étant choisies dans le groupe formé par l'hydrogène, le néon, l'azote, le monoxyde de carbone, le dioxyde de carbone, l'oxygène, l'argon, le krypton, le xénon, les hydrocarbures et l'eau, comprenant au moins:
- une étape de filtration d'au moins une impureté à l'état solide au moyen d'un filtre mécanique;
- et une étape d'adsorption d'au moins une impureté à l'état liquide ou gazeux;
et dans lequel on récupère au moins une partie de l'hélium au moins partiellement épuré, ledit hélium contenant au plus environ 1 ppb d'impuretés, du groupe formé par l'hydrogène, le néon, l'azote, le monoxyde de carbone, le dioxyde de carbone, l'oxygène, l'argon, le krypton, le xénon, les hydrocarbures et l'eau.

2. Procédé selon la revendication 1, caractérisé en ce que la filtration est réalisée au moyen d'au moins un filtre dont le diamètre de pore est ≤ 60 µm, de préférence ≤ 20 µm, préférentiellement ≤ 5 µm.

3. Procédé selon l'une des revendications 1 ou 2, caractérisé en ce que la filtration est réalisée au moyen d'au moins un filtre en métal ou en céramique.

4. Procédé selon la revendication 1, caractérisé en ce que l'adsorption d'au moins une impureté est effectuée sur un matériau adsorbant choisi dans le groupe formé par le charbon actif, un tissu carboné, les zéolites échangées ou non, l'alumine, le gel de silice et leurs mélanges.

5. Procédé selon l'une des revendications 1 à 4, caractérisé en ce que au moins une étape de filtration mécanique est effectuée en amont et/ou en aval d'au moins une étape d'adsorption.

6. Procédé selon l'une des revendications 1 à 5, caractérisé en ce que la purification de l'hélium est effectuée à une pression comprise entre 1.10⁵ Pa et 30.10⁵ Pa, de préférence entre 1.10⁵ Pa et 10.10⁵ Pa.

7. Procédé selon l'une des revendications 1 à 6, caractérisé en ce que l'adsorbant et/ou le filtre subit une étape de régénération.

8. Dispositif susceptible de mettre en oeuvre un procédé selon l'une des revendications 1 à 7, caractérisé en ce qu'il comporte une zone de purification (24, 25, 25') d'hélium (22, 23), laquelle zone de purification comprend au moins un filtre mécanique (25, 25') et au moins un lit d'adsorbant (24), des moyens d'alimentation (21, 22', 23', 27') en hélium à épurer de ladite zone de purification et des moyens de récupération (27, 30) d'hélium purifié contenant au plus 1 ppb d'impuretés.

9. Dispositif selon la revendication 8, caractérisé en ce qu'il comporte des moyens de stockage (30) d'hélium purifié, et/ou des moyens d'acheminement (27) en ligne de l'hélium purifié vers un site d'utilisation, et/ou des moyens de régénération du matériau adsorbant.

## Claims

1. Method for purifying helium in the liquid, diphasic, gas or supercritical state, having a boiling point Pe, with respect to at least one of its impurities having a boiling point Pe', with Pe' > Pe, the said impurities being selected from the group formed by hydrogen, neon, nitrogen, carbon monoxide, carbon dioxide, oxygen, argon, krypton, xenon, hydrocarbons and water, comprising at least:
- a step of filtering at least one impurity in the solid state using a mechanical filter;
- and a step of adsorption of at least one impurity in the liquid or gas state;
- and in which at least part of the at least partially purified helium is recovered, the said helium containing at most about 1 ppb of impurities in the group formed by hydrogen, neon, nitrogen, carbon monoxide, carbon dioxide, oxygen, argon, krypton, xenon, hydrocarbons and water.

2. Method according to Claim 1, characterized in that the filtering is carried out using at least one filter whose pore diameter is < 60 µm, preferably ≤ 20 µm, preferentially ≤ 5 µm.

3. Method according to either of Claims 1 and 2, characterized in that the filtering is carried out using at least one metal or ceramic filter.

4. Method according to Claim 1, characterized in that the adsorption of at least one impurity is carried out on an adsorbent material selected from the group formed by active carbon, carbon fabric, exchanged or unexchanged zeolites, alumina, silica gel and mixtures thereof.

5. Method according to one of Claims 1 to 4, characterized in that at least one mechanical filtering step is carried out upstream and/or downstream of at least one adsorption step.

6. Method according to one of Claims 1 to 5, characterized in that the purification of the helium is carried out at a pressure of between 1.10⁵ Pa and 30.10⁵ Pa, preferably between 1.10⁵ Pa and 10.10⁵ Pa.

7. Method according to one of Claims 1 to 6, characterized in that the adsorbent and/or the filter is subjected to a regeneration step.

8. Device for implementing a method according to one of Claims 1 to 7, characterized in that it has a purification zone (24, 25, 25') for helium (22, 23), which purification zone comprises at least one mechanical filter (25, 25') and at least one absorbent bed (24), means (21, 22', 23', 27') for feeding helium to be purified to the said purification zone and means (27, 30) for recovering purified helium containing at most 1 ppb of impurities.

9. Device according to Claim 8, characterized in that it has means (30) for storing purified helium, and/or means (27) for conveying the purified helium on-line to a site where it is used, and/or means for regenerating the adsorbent material.

## Patentansprüche

1. Verfahren zur Reinigung von Helium in flüssigem, zweiphasigem, gasförmigem oder überkritischem Zustand mit einem Siedepunkt Pe hinsichtlich mindestens einer seiner Verunreinigungen mit einem Siedepunkt Pe', wobei Pe' > Pe, wobei die Verunreinigungen aus der Gruppe bestehend aus Wasserstoff, Neon, Stickstoff, Kohlenmonoxid, Kohlendioxid, Sauerstoff, Argon, Krypton, Xenon, Kohlenwasserstoffen und Wasser stammen, mit zumindest:
- einem Filtrationsschritt, bei dem man mindestens eine Verunreinigung in festem Zustand mit Hilfe eines mechanischen Filters abfiltriert;
- und einem Adsorptionsschritt, bei dem man mindestens eine Verunreinigung in flüssigem oder gasförmigem Zustand adsorbiert;
und bei dem man zumindest einen Teil des Heliums zumindest teilweise gereinigt zurückgewinnt, wobei das Helium höchstens etwa 1 ppb an Verunreinigungen aus der Gruppe bestehend aus Wasserstoff, Neon, Stickstoff, Kohlenmonoxid, Kohlendioxid, Sauerstoff, Argon, Krypton, Xenon, Kohlenwasserstoffen und Wasser enthält.

2. Verfahren nach Anspruch 1, dadurch gekennzeichnet, daß man die Filtration mit Hilfe mindestens eines Filters durchführt, der einen Porendurchmesser von ≤ 60 µm, vorzugsweise ≤ 20 µm, bevorzugt ≤ 5 µm, aufweist.

3. Verfahren nach Anspruch 1 oder 2, dadurch gekennzeichnet, daß man die Filtration mit Hilfe mindestens eines Metall- oder Keramikfilters durchführt.

4. Verfahren nach Anspruch 1, dadurch gekennzeichnet, daß man die Adsorption mindestens einer Verunreinigung an einem Adsorptionsmaterial aus der Gruppe bestehend aus Aktivkohle, Kohlenstoffgewebe, gegebenenfalls ausgetauschten Zeolithen, Aluminiumoxid, Kieselgel und deren Gemischen durchführt.

5. Verfahren nach einem der Ansprüche 1 bis 4, dadurch gekennzeichnet, daß man vor und/oder nach mindestens einem Adsorptionsschritt mindestens einen Schritt mechanischer Filtration durchführt.

6. Verfahren nach einem der Ansprüche 1 bis 5, dadurch gekennzeichnet, daß man die Heliumreinigung bei einem Druck zwischen 1.10⁵ Pa und 30.10⁵ Pa, vorzugsweise zwischen 1.10⁵ Pa und 10.10⁵ Pa, durchführt.

7. Verfahren nach einem der Ansprüche 1 bis 6, dadurch gekennzeichnet, daß man das Adsorptionsmittel und/oder das Filter einem Regenerationsschritt unterwirft.

8. Vorrichtung zur Durchführung eines Verfahrens nach einem der Ansprüche 1 bis 7, dadurch gekennzeichnet, daß sie eine Reinigungszone (24, 25, 25') für Helium (22, 23), welche mindestens ein mechanisches Filter (25, 25') und mindestens eine Adsorptionsmittelschüttung (24) enthält, Einrichtungen (21, 22', 23', 27') zur Einspeisung von zu reinigendem Helium in die Reinigungszone und Einrichtungen (27, 30) zur Rückgewinnung von gereinigtem Helium mit höchstens 1 ppb an Verunreinigungen aufweist.

9. Vorrichtung nach Anspruch 8, dadurch gekennzeichnet, daß sie Einrichtungen (30) zur Speicherung von gereinigtem Helium und/oder Einrichtungen (27) zur Online-Zuführung des gereinigten Heliums zu einem Verwendungsort und/oder Einrichtungen zur Regeneration des Adsorptionsmaterials aufweist.
